# EUROPEAN PATENT SPECIFICATION

(11) **EP 1 293 125 B1**
(45) Date of publication and mention of the grant of the patent: **05.10.2011**
(21) Application number: 01977950.3
(22) Date of filing: 11.05.2001
(51) Int. Cl.: A01N 59/02, A01N 25/10, C08B 31/00

(54) **SYNTHETIC HYDRATED ORGANOSULFUR AGENT, PRODUCTION PROCESS AND BACTERICIDAL METHOD BY USING THE SAME**
SYNTHETISCHER HYDRATISIERTER SCHWEFELORGANISCHER WIRKSTOFF, HERSTELLUNGSVERFAHREN UND VERWENDUNG
AGENT ORGANOSULFURE SYNTHETIQUE ET HYDRATE, PROCEDE DE PREPARATION ET PROCEDE BACTERICIDE UTILISANT CET AGENT

(30) Priority: 15.05.2000 JP 2000183763
(43) Date of publication of application: 19.03.2003
(73) Proprietor: Oda, Yosuke, Takaokagun, Kochi 789-1221 (JP)
(72) Inventor: Oda, Yosuke, Takaokagun, Kochi 789-1221 (JP)
(74) Representative: du Pont, Jeroen
(86) International application number: PCT/JP2001/003971
(87) International publication number: WO 2001/087069

(56) References cited:
- JP-A- 5 507 734
- JP-C2- 98 985
- US-A- 4 859 377

## Description

### TECHNICAL FIELD

The present invention relates to a synthetic hydrated organosulfur agent that serves as a soil fungicidal and antifungal agent in the field of agriculture. More precisely, the invention relates to a method of producing it by enveloping a conventional hydrated inorganic sulfur agent in starch through the colloidal action of starch, and to a method of using the synthetic hydrated organosulfur inclusion agent for exterminating fungi.

### BACKGROUND ART

Various microorganisms live in soil. Many of them are pathogenic to crops, and it is known that pathogenic mold fungi (e.g., fusariums, pythiums) cause soil diseases such as root and stem rotting disease of gingers, and runner dwarfing atrophy of cucumbers. In cultivating crops, it is indispensable to exterminate such soil pathogenic fungi, and it is very important to prevent crops from being infected by such pathogenic microbes for their healthy growth.

Heretofore soil disinfection is carried out for preventing soil infection with pathogenic microbes, for which is used an extremely effective methyl bromide agent. Recently, however, the ozone layer destruction by methyl bromide has become a subject of discussion, and the use of methyl bromide has been inhibited since 2000 in US and EC and will be inhibited in 2005 in many other countries. At present, other soil disinfectants also have some negative influence on the environment and often cause some chemical injury, and in addition, they are expensive and troublesome and could not ensure complete disinfection. It is desired to develop a substitute for such a methyl bromide agent. Especially desired is a fungicidal and antifungal agent for soil diseases, which is harmless to humans and animals and also to the environment, which causes no chemical injury to crops, which is inexpensive and is not troublesome in spraying it, and which can surely exterminate soil fungi and prevent soil diseases. The subject matter of the present invention is to provide a synthetic hydrated sulfur agent that is a novel fungicidal and antifungal agent for soil diseases, and to provide a method for producing it and a method of using it for exterminating soil fungi.

Coated microbial pesticides have been prepared comprising antagonistic microorganisms and natural biopolymers (JP 5507734, 1993-11-04).

Biological control agents such as pathogenic bacteria and viruses have been encapsulated in a starch matrix (US 4,859,377).

### DISCLOSURE OF THE INVENTION

Troubled with the root and stem rotting disease of gingers by pathogenic pythiums, I, the present inventor desired to develop a novel soil fungicide substitutable with a methyl bromide agent. While spraying various chemicals on ginger plants, I have specifically noted a hydrated inorganic sulfur agent.

The inorganic sulfur agent is highly effective for powdery mildew of plants on the ground, but is not effective for the underground parts of plants. Given that situation, I studied the way of inactivating sulfur in soil, and I have specifically noted the protective colloidal action of starch on the hydrated inorganic sulfur agent, and tried synthesizing a hydrated organosulfur agent. As a result, I have succeeded in inactivating sulfur in soil and have produced a synthetic hydrated organosulfur agent.

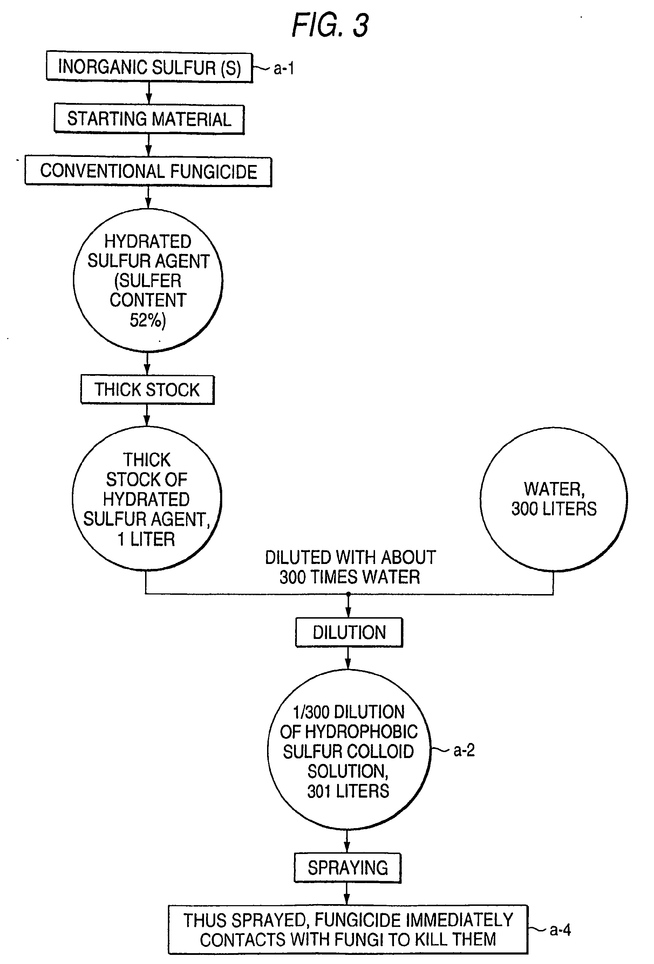

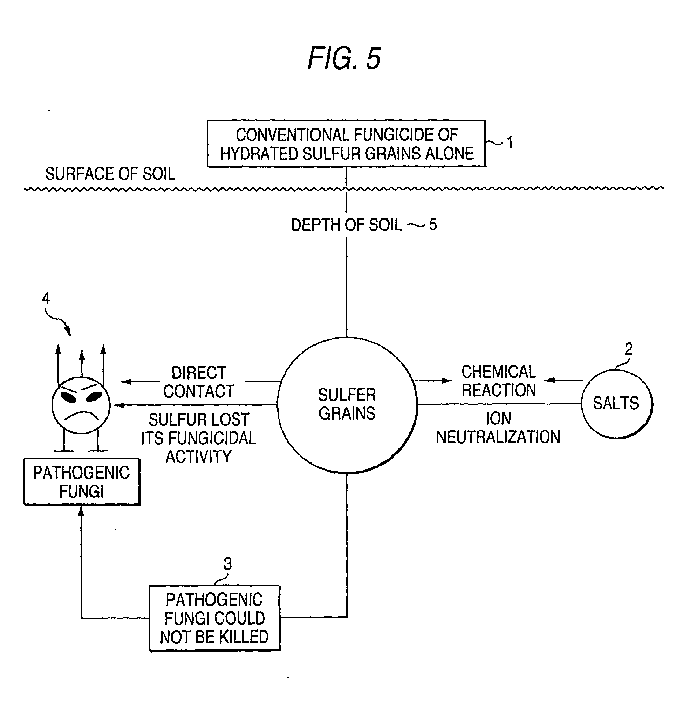

The conventional hydrated inorganic sulfur agent is directly sprayed on pathogenic fungi for exterminating them, and a thick stock of the hydrated sulfur agent (a-1) is diluted with water, as in Fig. 3 and Fig. 5. Concretely, 300 liters of water is added to one liter of the thick stock of the agent to prepare a dilution (a-2), and this is actually used. The thus-prepared dilution (a-2) is directly sprayed on pathogenic fungi growing on plants, and this is a method of spraying the dilution on the soil surface or on crop plants so as to make it in direct contact with pathogenic fungi to kill them.

However, the hydrated inorganic sulfur agent has a sulfur content of 52 %, and it readily reacts with salts (of calcium, magnesium, etc.) in soil to coagulate therein, and loses its fungicidal effect.

In the related art technology mentioned hereinabove, the hydrated sulfur agent is an inorganic sulfur solution, and its thick stock is diluted 300 to 400-fold, and the resulting dilution is directly sprayed on pathogenic fungi to kill them. Therefore, one drawback of the hydrated inorganic sulfur agent is that it loses its fungicidal effect against pathogenic fungi in soil since sulfur therein rapidly undergoes chemical reaction with salts in soil.

Accordingly, the present invention is as follows:
(1) An organic substance, starch is added to the hydrated inorganic sulfur agent to synthesize a novel type of fungicide in which the sulfur is enveloped in starch, and this is sprayed on soil. Since the sulfur is still kept enveloped in starch in the soil, it does not react with salts (of calcium, magnesium, etc.) in the soil.
   Therefore, the novel fungicide does not coagulate even in soil and still keeps its fungicidal action of sulfur, and its fungicidal effect does not lower. Accordingly, the present invention herein provides a complete fungicidal method of exterminating soil pathogenic fungi that have heretofore been difficult to exterminate.
(2) In the novel fungicide of the invention, the starch grains that have formed protective colloid do not react with soil salts and are stably kept therein. When the starch grains are degraded by pathogenic fungi in soil and release sulfur, the sulfur that has been kept stable in the grains exhibits its strong fungicidal activity to completely exterminate pathogenic fungi while the starch grains are degraded. The sulfur grains enveloped in starch do not exhibit their fungicidal effect even when they are brought into contact with fungi, but exhibit the effect only after they are degraded to release sulfur. The fungicidal method of the invention is characterized by this feature.

Specifically, in the fungicidal method of the invention, the starch component of the fungicide attracts pathogenic fungi in soil, serving as a substrate (feed) for them, and while the starch grains with sulfur therein have begun to degrade to release sulfur, the thus-released sulfur exterminate the pathogenic fungi. The subject matter of the invention is to provide a synthetic hydrated organosulfur agent prepared by adding starch to a hydrated inorganic sulfur agent, and to provide a method for producing it and a method of using it for exterminating pathogenic fungi.

The difference between the fungicidal method with a conventional fungicide and the fungicidal method with the synthetic hydrated organosulfur agent is described below.

The conventional fungicide is applied to pathogenic fungi to kill them through its direct contact with pathogenic fungi. On the other hand, the synthetic hydrated organosulfur agent of the invention is a soil fungicide, and this is applied to soil, in which the starch component of the agent attracts and germinates the microbes (pathogenic fungi, such as fusariums, pythiums and other various mold fungi), and the sulfur component having been enveloped in starch but having been released out through degradation of sulfur-containing starch grains acts to kill the thus-attracted microbes in soil. The novel type of fungicide, synthetic hydrated organosulfur agent of the invention does not lose its fungicidal activity for a long period of time before the sulfur-containing starch grains therein are degraded in soil, and the fungicidal agent of the invention is characterized by this specific feature.

As in the description as above, the invention provides such a novel type of fungicide, synthetic hydrated organosulfur agent which is degraded by microbes in soil and which kills them after having been thus degraded by them.

### BRIEF DESCRIPTION OF THE DRAWINGS

Fig. 1 shows Embodiment 1 of the invention of how to produce the fungicide of the invention.
Fig. 2 shows a method of spraying the product produced in Fig. 1.
Fig. 3 shows a conventional production technique.
Fig. 4 shows Embodiment 2 of the invention of how to exterminate pathogenic fungi with the fungicide of the invention.
Fig. 5 shows a conventional method of fungicide application to soil.

### BEST MODES OF CARRYING OUT THE INVENTION

The invention is described in detail hereinunder with reference to the drawings that illustrate the production method and the fungicidal method of killing pathogenic fungi in soil of the invention.

First described is the production method. The method of producing the synthetic hydrated organosulfur agent of the invention is characterized in that starch is added to a conventional hydrated inorganic sulfur agent to prepare sulfur colloidal grains enveloped in starch, and the fungicidal activity of sulfur in the resulting grains is protected by starch therein. Using a conventional hydrated inorganic sulfur agent (fungicide), pathogenic fungi in soil are extremely difficult to exterminate. The conventional hydrated inorganic sulfur agent rapidly reacts with salts in soil and readily coagulates therein to soon lose its fungicidal activity. To solve the problem, the fungicidal activity of sulfur in the fungicide must be kept completely as it is therein. For the purpose, the sulfur grains are enveloped in starch in the invention.

Specifically, sulfur grains are enveloped in starch so as not react with salts in soil. In other words, starch acts as an insulating substance for sulfur in the invention. For exterminating soil pathogenic fungi, sulfur in the fungicide must keep its strong oxidative activity. Having the oxidative activity, sulfur reacts with the SH enzyme in pathogenic fungi to block the respiration of the fungi, and the fungi are thereby killed. Described in the *Handbook of Agricultural Chemicals,* the fungicidal activity of sulfur is well known. However, the conventional hydrated inorganic sulfur agent chemically reacts with salts in soil before it acts to kill pathogenic fungi, and its drawback is that it is almost ineffective when applied to soil. Sulfur has a property of hydrophobic colloid, while starch has a property of hydrophilic colloid. I, the present inventor have specifically noted the two different properties of sulfur and starch, and have succeeded in producing the novel fungicide of the invention by combining the two, sulfur and starch.

The hydrophilic colloid, the hydrophobic colloid, and the protected colloid formed of the two colloids are described below.

### (1) Property of hydrophilic colloid:

In its molecules, starch has many reactive groups of good hydrability. Therefore, the colloidal solution prepared by dissolving starch in water contains starch colloid grains hydrated with many water molecules on their surfaces.

Accordingly, even when salts are added to it, their ions are cancelled by the hydrated starch colloid grains therein. As a result, the charges of the hydrated starch colloid grains are influenced little by the salt ions, and are still kept stably dispersed in the form of their ions, therefore not coagulating in the solution. Having the property, the colloid is referred to as a hydrophilic colloid.

### (2) Property of hydrophobic colloid:

Sulfur colloid grains have many hydrophobic groups on their surfaces and therefore they are hydrated little with water molecules. Accordingly, the surface charges of such sulfur colloid grains are readily neutralized even with a small amount of salts, and therefore readily coagulate. The coagulated sulfur grains do no more have active ions for oxidation on their surfaces and therefore lose its chemical reactivity. A lot of salts derived from chemical fertilizer and weathered soil grains exist in soil, and the hydrophobic sulfur colloid is readily coagulated by these salts to thereby lose its strong oxidative activity and even its fungicidal activity.

Through the mechanism, it is believed that the conventional fungicide, hydrated inorganic sulfur agent will lose its fungicidal activity in soil.
(3) The property of the protected colloid is described. When a hydrophilic colloid solution is added to a hydrophobic colloid solution, the hydrophilic colloid envelops the hydrophobic colloid therein, and the resulting solution becomes colloidal. Specifically noted this mechanism, I, the present inventor synthesized a protected colloid in which a hydrated starch solution acting as a hydrophilic colloid envelops sulfur grains acting as a hydrophobic colloid therein. Further specifically noted the action of the protected colloid, the present inventor applied it to preparing a synthetic hydrated organosulfur agent and succeeded in producing a novel type of fungicide of the invention.

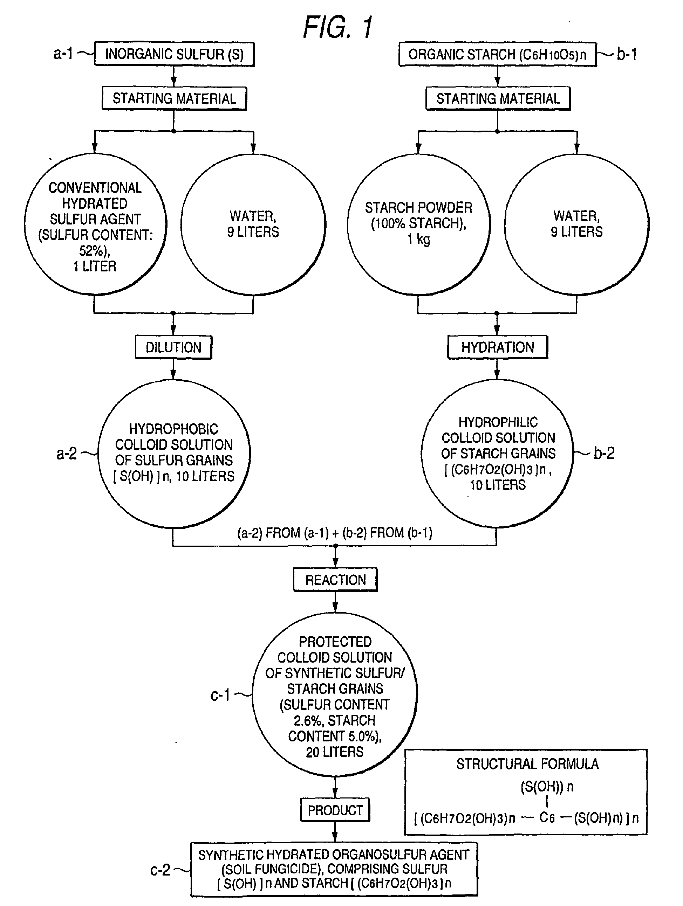

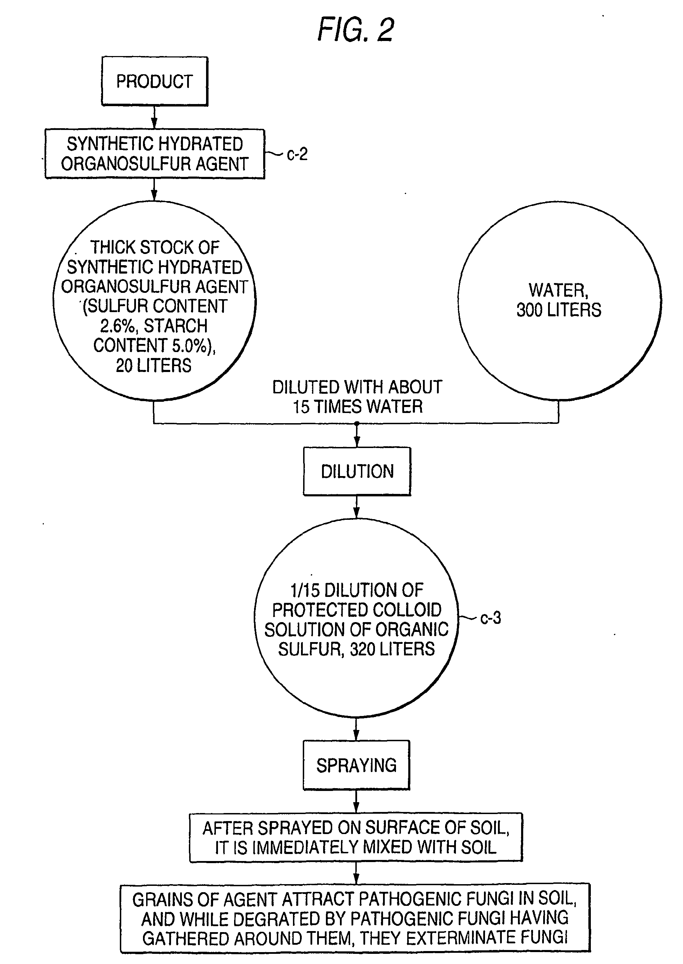

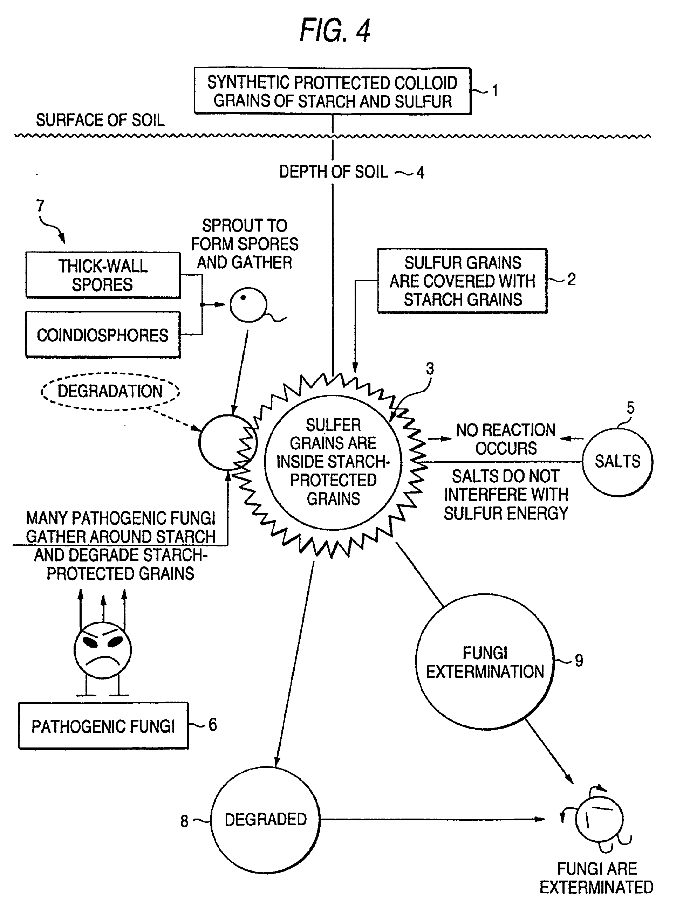

Embodiment 1 of the invention is in Fig. 1. As illustrated, the agent of the invention is produced from starch and a hydrated inorganic sulfur agent. The thick stock of the hydrated sulfur agent (a-1) is comprised of 52 % of sulfur and 48 % of surfactant, and this is diluted with water. On the other hand, starch (b-1) is 100 % starch powder. One liter of the thick stock (a-1) is diluted with 9 liters of water to prepare a hydrophobic colloid solution (a-2). One kg of the starch powder (b-1) is sampled in a separate container, to which is added 9 liters of water to prepare a hydrophilic colloid solution (b-2).The resulting (b-2) is added to (a-2), and well stirred. In this stage, the sulfur grains in (a-2) are enveloped in the starch grains of (b-2) to give a protected colloid solution (c-1). The solution (c-1) is the final product in this process, and this is used as a fungicide. When this is applied to soil, starch therein prevents sulfur therein from chemically reacting with the salts in soil, therefore ensuring 100 % activity of sulfur to exterminate soil fungi (Fig. 2). 20 liters f the solution (c-1) is diluted with 15-fold water, and the resulting dilution is directly sprayed onto the surface of soil. Thus mixed with soil, the fungicide exhibits the action as in Fig. 4. 20 liters of the solution (c-1) is the synthetic hydrated organosulfur agent of the invention.

The synthetic hydrated organosulfur agent of the invention is used as a fungicide against soil fungi. The technical idea of the invention is in Fig. 4, which illustrates the novel and epoch-making fungicidal method of the invention. As illustrated therein, the novel fungicide of the invention exterminates soil fungi that could not be exterminated by any conventional fungicide. In particular, pathogenic fungi to cause a root and stem rotting disease of gingers (e.g., pythiums and fusariums) are serious and troublesome and are difficult to exterminate, and, at present, no one knows any fungicide capable of completely exterminating them. Using the synthetic hydrated organosulfur agent of the invention, the present inventor has succeeded in completely exterminating the fungi.

The fungicidal mechanism of the fungicide is described below.

Needless-to-say, the characteristic feature of the invention is that an organic material starch is combined with sulfur. The invention takes advantage of the property of starch. The starch substrate (feed for fungi) contains a saccharide glucose polymerized with the starch grains. Pathogenic fungi are extremely sensitive to the saccharide, and they first act on it to decompose it. I, the present inventor specifically noted the living habits of the fungi. Since the substrate of the synthetic hydrated organosulfur agent contains starch, the fungi in soil on which the agent has been sprayed react with the substrate grains after they are mixed with the agent, and they sprout to have spores. 24 hours after the application of the agent to soil, the soil will be filled with various microbes, and they are all attracted by the starch in the agent. In that stage, when the starch in the agent is degraded by these microbes, the thus-degraded agent releases sulfur that has been enveloped in the starch therein, and the thus-released sulfur acts to exterminate the pathogenic fungi in the soil.

The characteristic feature of the fungicidal method of the invention is that the microbes exposed to the fungicide die by themselves (for example, they kill themselves). The fungicidal activity-expressing mechanism of the synthetic hydrated organosulfur agent of the invention that comprises sulfur and starch is described below.

Based on its strong oxidative activity, sulfur has a strong fungicidal activity, and it acts on the SH enzyme in pathogenic fungi (e.g., fusariums, pythiums and other mold fungi) to block the respiration of the fungi, and the fungi are thereby killed. In the fungicide of the invention, sulfur is enveloped in starch.

Starch in the fungicide plays the following four roles:
1. It is a hydrophilic colloid and has the ability to protect sulfur, and sulfur is enveloped in it.
2. It acts as an insulating substance, and prevents the reaction of sulfur with salts.
3. It serves as a substrate (feed) for pathogenic fungi.
4. It assists pathogenic fungi to sprout to form spores around them, and it attracts the thus-sprouted fungi.

Having all these four actions combined, the synthetic hydrated organosulfur agent of the invention attains the object of the invention. Starch is a polymer of saccharides such as glucose, and it gives a lot of saccharides when hydrolyzed. Accordingly, microbes including pathogenic fungi gather around starch and start to degrade it. In this stage, the microbes sprout to form thick-wall spores and conidiosphores therearound, and they also start to degrade starch. While the starch is degraded in that manner, it releases sulfur that it has enveloped therein, and the thus-released sulfur completely exterminates pathogenic fungi. The present inventor has recognized the mechanism and has completed the invention. When the agent of the invention is sprayed on the surface of soil and mixed with it according to the method of the invention, the oxidative activity of sulfur in the agent is kept protected by starch therein and the sulfur does not lose its fungicidal activity at all in this stage. After the starch substrate in the agent has been assimilated by pathogenic fungi in soil, the sulfur in the agent exhibits its fungicidal activity. The fungicidal effect of the agent of the invention against pathogenic fungi is complete, and the agent has no residual toxicity and is therefore extremely safe. In addition, the sulfur having remained in soil is utilized by crops as an essential nutrient, and its load to the environment is extremely low. Both sulfur and starch in the agent of the invention are natural substances, and the agent is a novel type of soil fungicide.

Embodiment 2 of the invention is described with reference to Fig. 4, in which 1 indicates the synthetic hydrated organosulfur agent 1 that is in the form of protected colloid grains of sulfur + starch, and 4 indicates soil. Referring to Fig. 4, the mechanism of the grains of the agent in soil is described.

The grains 1 do not react with salts 5. Each grain 1 is coated with starch grains 2 that envelop and protect sulfur therein. Thus protected, the oxidative activity-having sulfur does not react with the salts 5, and it keeps its condition capable of 100 % exhibiting its fungicidal activity. The starch grains that cover the sulfur grains are naturally composed of monoses such as glucose, and many pathogenic fungi have a strong affinity for starch. Therefore, when starch is added to soil, it is rapidly degraded by microbes existing in the soil. While the starch in the soil is thus degraded, sulfur enveloped in the starch grains is exposed out, and it inactivates the SH enzyme in pathogenic fungi owing to its oxidative activity. As a result, the pathogenic fungi could no more breathe and therefore die as indicated by 9. Many pathogenic fungi in soil are extremely difficult to exterminate, and conventional fungicidal chemicals often fail to exterminate them since they react with salts in soil before being directly contacted with pathogenic fungi to kill them, and therefore lose their oxidative activity and even their fungicidal activity. Presenting herein the agent of the invention that solves the drawbacks of such conventional fungicidal chemicals, the present inventor has succeeded in industrial application of the fungicidal agent of the invention.

Fig. 1 and Fig. 2 are referred to for describing the effect of the embodiment of the invention. As illustrated, the hydrophilic colloid property of starch (b-1) is utilized for increasing the fungicidal activity of the hydrated sulfur agent (a-1) in soil. Concretely, the hydrophobic colloid of sulfur grains is enveloped in starch. Accordingly, the fungicidal activity in soil of the conventional hydrated inorganic sulfur agent as in Fig. 3 is significantly enhanced. The present invention is based on this finding. In addition, as in Fig. 4, the starch grains 2 act to induce the pathogenic fungi in soil (e.g., fusariums, pythiums and other harmful mold fungi) to go toward the 1, and the pathogenic fungi thus having been attracted are killed as in 9 by the sulfur grains 3 having been exposed out through degradation 8 of the starch-covered grains 1. One method of increasing the fungicidal activity according to the invention is described below.

As in Fig. 3, many conventional fungicides exhibit their fungicidal activity when directly contacted with pathogenic fungi that live in the surface of soil. In the depths of soil, however, the fungicides rapidly react with salts therein, and their fungicidal activity greatly lowers, as in Fig. 5. In order that the fungicides could also exhibit their fungicidal activity even in the depths of soil like that in the surface of soil, carbohydrates such as starch that microbes well assimilate as a substrate for them are used and put into water to form hydrophilic colloid (Fig. 1). Synthetic chemicals that have a property of hydrophobic colloid and will readily react with salts in soil are enveloped in hydrophilic colloid, and according to the method, the chemicals could exhibit their effect even inside soil. (This is illustrated in Fig. 4.)

According to the novel method of the invention, agricultural chemicals can be effectively used, and their load to not only the soil environment but also the entire environment to pollute the natural environment could be reduced.

### Example of the synthetic hydrated organosulfur agent of the invention:

As in Fig. 1, 9 liters of water was added to one liter of a hydrated inorganic sulfur agent (having a sulfur content of 52 %) to prepare a hydrophobic colloid solution (a-2). On the other hand, 9 liters of water was added to 1 kg of starch powder to prepare a hydrophilic colloid solution (b-2). The resulting (b-2) was added to (a-2) and well stirred to prepare a protected colloid solution (c-1). The thus-obtained, protected colloid solution (c-1) was diluted 15-fold. From 800 to 1,000 liters/10 ares of the resulting soil fungicide is sprayed over the field in which ginger plants are to be cultivated, and it was mixed with the soil in the field. 20 days after the spraying with the soil fungicide, ginger plants were planted in the field. As a result, the ginger plants having grown in the field did not suffer from a root and stem-rotting disease (caused by pythiums) that is serious to gingers.

### INDUSTRIAL APPLICABILITY

As described hereinabove, the synthetic hydrated organosulfur agent of the invention is prepared by enveloping an inorganic sulfur agent in a hydrophilic colloid of a starch solution. When this is applied to soil, the hydrated inorganic sulfur agent therein is prevented from reacting with salts in soil, and it can directly act on pathogenic fungi in soil to exhibit its own fungicidal activity against them. Accordingly, the fungicidal effect of the synthetic hydrated organosulfur agent of the invention is extremely enhanced.

In addition, the novel technical idea of the invention of enveloping a hydrophobic colloid of sulfur in a hydrophilic colloid of starch can also apply to any other agricultural chemicals, and the invention has established a novel type of method of efficiently applying agricultural chemicals to farms and plantations. The invention will be greatly helpful in reducing the load of agricultural chemicals to the environment.

## Claims

1. A synthetic hydrated organosulfur agent which comprises an inorganic hydrated sulfur agent, the sulfur grains thereof are enveloped in starch grains.

2. The synthetic hydrated organosulfur agent as claimed in claim 1, for which the starting materials are inorganic sulfur, starch and water.

3. A soil fungicide comprising the synthetic hydrated organosulfur agent of claim 1 as active ingredient.

4. A method for producing a synthetic hydrated organosulfur agent as claimed in claim 1, by adding starch to the inorganic hydrated sulphur agent.

5. A method for producing a synthetic hydrated organosulfur agent as claimed in claim 4, wherein a hydrophobic colloid solution a-2 is made from the inorganic hydrated sulphur agent and water; wherein a hydrophilic colloid solution of starch grains b-2 is made from starch powder and water, and wherein the synthetic hydrated organosulfur agent c-2 is made by reacting a-2 with b-2.

6. A method for producing a synthetic hydrated organosulfur agent as claimed in claim 5, where, on 1 liter of a hydrated inorganic sulphur agent (having a sulphur content of 52%) 9 liters of water is added to prepare the hydrophobic colloid solution a-2.

7. A method for producing a synthetic hydrated organosulfur agent as claimed in claim 5, where on 1 kg of starch powder 9 liters of water is added to prepare the hydrophilic colloid solution b-2.

8. A method for producing a synthetic hydrated organosulfur agent as claimed in claims 5-7, wherein the hydrophilic colloid solution b-2 is added to the hydrophobic colloid solution a-2 and stirred to prepare a protected colloid solution c-1.

9. A method for exterminating soil fungi which comprises spraying the synthetic hydrated organosulfur agent of claim 1 on a surface of soil and mixing the same with soil, having the starch degraded and thereby having the sulfur agent released to provide a fungicidal effect against pathogenic fungi.

## Patentansprüche

1. Synthetisches, hydratisiertes organisches Schwefelmittel, welches ein anorganisches, hydratisiertes Schwefelmittel umfasst, dessen Schwefelkörner in Stärkekörner eingehüllt sind.

2. Synthetisches, hydratisiertes organisches Schwefelmittel nach Anspruch 1, für welches die Ausgangsmaterialien anorganischer Schwefel, Stärke und Wasser sind.

3. Bodenpilztötendes Mittel umfassend das synthetische, hydratisierte organische Schwefelmittel nach Anspruch 1 als aktiven Inhaltsstoff.

4. Verfahren zum Herstellen eines synthetischen, hydratisierten organischen Schwefelmittels nach Anspruch 1, durch Hinzufügen von Stärke zu dem anorganischen, hydratisierten Schwefelmittel.

5. Verfahren zum Herstellen eines synthetischen, hydratisierten organischen Schwefelmittels nach Anspruch 4, in welchem eine hydrophobe kolloidale Lösung a-2 aus dem anorganischen, hydratisierten Schwefelmittel und Wasser hergestellt wird; in welchem eine hydrophile kolloidale Lösung aus Stärkekörnern b-2 aus Stärkepulver und Wasser hergestellt wird, und das synthetische hydratisierte organische Schwefelmittel c-2 durch Reaktion von a-2 mit b-2 hergestellt wird.

6. Verfahren zum Herstellen eines synthetischen, hydratisierten organischen Schwefelmittels nach Anspruch 5, in welchem auf 1 Liter eines hydratisierten anorganischen Schwefelmittels (mit einem Schwefelgehalt von 52%) 9 Liter Wasser hinzugegeben werden, um die hydrophobe kolloidale Lösung a-2 zu präparieren.

7. Verfahren zum Herstellen eines synthetischen hydratisierten organischen Schwefelmittels nach Anspruch 5, in welchem auf 1 kg Stärkepulver 9 Liter Wasser hinzugegeben werden, um die hydrophile kolloidale Lösung b-2 zu präparieren.

8. Verfahren zum Herstellen eines synthetischen, hydratisierten organischen Schwefelmittels nach Anspruch 5 bis 7, in welchem die hydrophile kolloidale Lösung b-2 der hydrophoben kolloidalen Lösung a-2 hinzugegeben wird und verrührt wird, um eine geschützte kolloidale Lösung c-1 zu präparieren.

9. Verfahren zum Vernichten von Bodenpilzen, welches ein Sprühen des synthetischen, hydratisierten organischen Schwefelmittels nach Anspruch 1 auf eine Oberfläche des Bodens und ein Mischen des Bodens umfasst, wobei die Stärke zersetzt wird und **dadurch** das Schwefelmittel freigegeben wird, um eine fungizide Wirkung gegenüber pathogenen Pilzen zu schaffen.

## Revendications

1. Agent organosulfuré hydraté synthétique comprenant un agent sulfuré hydraté inorganique, dont les grains de soufre sont enveloppés dans des grains d'amidon.

2. Agent organosulfuré hydraté synthétique selon la revendication 1, pour lequel les matières premières sont du soufre inorganique, de l'amidon et de l'eau.

3. Fongicide de sol comprenant l'agent organosulfuré hydraté synthétique selon la revendication 1 en tant qu'ingrédient actif.

4. Procédé de production d'un agent organosulfuré hydraté synthétique selon la revendication 1, par ajout d'amidon à l'agent sulfuré hydraté inorganique.

5. Procédé de production d'un agent organosulfuré hydraté synthétique selon la revendication 4, dans lequel une solution colloïdale hydrophobe (a-2) est préparée à partir de l'agent sulfuré hydraté inorganique et d'eau ; dans lequel une solution colloïdale hydrophile de grains d'amidon (b-2) est préparée à partir d'une poudre d'amidon et d'eau ; et dans lequel l'agent organosulfuré hydraté synthétique (c-2) est préparé en faisant réagir (a-2) avec (b-2).

6. Procédé de production d'un agent organosulfuré hydraté synthétique selon la revendication 5, dans lequel pour 1 litre d'un agent sulfuré hydraté inorganique (ayant une teneur en soufre de 52 %), 9 litres d'eau sont ajoutés pour préparer la solution colloïdale hydrophobe (a-2).

7. Procédé de production d'un agent organosulfuré hydraté synthétique selon la revendication 5, dans lequel pour 1 kg de poudre d'amidon, 9 litres d'eau sont ajoutés pour préparer la solution colloïdale hydrophile (b-2).

8. Procédé de production d'un agent organosulfuré hydraté synthétique selon les revendications 5 à 7, dans lequel la solution colloïdale hydrophile (b-2) est ajoutée à la solution colloïdale hydrophobe (a-2) et agitée pour préparer une solution colloïdale protégée (c-1).

9. Procédé d'extermination de champignons du sol qui comprend la pulvérisation de l'agent organosulfuré hydraté synthétique selon la revendication 1 sur la surface d'un sol et son mélange avec la terre, l'amidon étant dégradé, libérant de ce fait l'agent sulfuré pour offrir un effet fongicide contre des champignons pathogènes.
